# EUROPÄISCHE PATENTSCHRIFT

(11) **EP 3 036 454 B1**
(45) Veröffentlichungstag und Bekanntmachung des Hinweises auf die Patenterteilung: **26.02.2020**
(21) Anmeldenummer: 14747897.8
(22) Anmeldetag: 30.07.2014
(51) Int. Cl.: F16H 3/00, F16H 3/093

(54) **DOPPELKUPPLUNGSGETRIEBE**
DUAL-CLUTCH TRANSMISSION
TRANSMISSION À DOUBLE EMBRAYAGE

(30) Priorität: 19.08.2013 DE 102013216384
(43) Veröffentlichungstag der Anmeldung: 29.06.2016
(73) Patentinhaber: Volkswagen Aktiengesellschaft, 38440 Wolfsburg (DE)
(72) Erfinder: GRÜNEWALD, Johannes, 38170 Schöppenstedt (DE); VOIGT, Arne, 38440 Wolfsburg (DE); VÖGE, Wolfgang, 38110 Braunschweig (DE)
(86) Internationale Anmeldenummer: PCT/EP2014/066408
(87) Internationale Veröffentlichungsnummer: WO 2015/024750

(56) Entgegenhaltungen:
- DE-A1-102011 108 452
- DE-A1-102012 203 371

## Beschreibung

Die Erfindung betrifft ein Doppelkupplungsgetriebe für ein Kraftfahrzeug mit den Merkmalen des Oberbegriffs des Patentanspruchs 1. Bei dem Doppelkupplungsgetriebe sind mehrere Vorwärtsgänge schaltbar, wobei mindestens ein Vorwärtsgang als Windungsgang ausgebildet ist. Zwischen zwei Getriebeeingangswellen und zwei Triebwellen sind mehrere Zahnräder kämmend angeordnet, wobei einige der Zahnräder als Losräder ausgebildet sind.

Es sind nun Doppelkupplungsgetriebe bekannt, wobei die Zahnräder mindestens zwei Doppelradebenen bilden.

Aus der DE 10 2009 002 357 A1 ist ein Doppelkupplungsgetriebe für ein Kraftfahrzeug, mit zwei Reibkupplungen, zwei Getriebeeingangswellen und zwei Triebwellen sowie mehreren Synchronisiervorrichtungen bekannt. Die erste Getriebeeingangswelle ist über die erste Reibkupplung und die zweite Getriebeeingangswelle ist über die zweite Reibkupplung mit einem Antriebsmotor verbindbar beziehungsweise verbunden. Den beiden Getriebeeingangswellen sind jeweils drei Festräder zugeordnet. Der einen Triebwelle sind sechs Losräder und der anderen Triebwelle sind zwei Losräder zugeordnet. Die der äußeren Getriebeeingangswelle zugeordneten beiden äußeren Festräder kämmen dabei jeweils mit zwei entsprechenden Losrädern auf den beiden Triebwellen und bilden daher zwei Doppelradebenen. Zur Realisierung eines Rückwärtsganges ist in der einen Doppelradebene ein Zwischenrad zwischengeschaltet (zur Drehumkehrung und damit zur Realisierung eines Rückwärtsganges). Die entsprechenden Synchronisiervorrichtungen sind auf den Triebwellen angeordnet. Das Doppelkupplungsgetriebe weist acht Vorwärtsgänge auf und ist für eine Frontquerbauweise in einem Kraftfahrzeug geeignet. Die Vorwärtsgänge sind lastschaltbar.

Aus der DE 10 2009 002 348 A1 ist ein ähnliches Doppelkupplungsgetriebe mit ebenfalls zwei Doppelradebenen und insgesamt sechs Radebenen bekannt. Auch bei diesem Doppelkupplungsgetriebe sind acht Vorwärtsgänge mit mindestens sieben lastschaltbaren Gangstufen vorgesehen. Das Doppelkupplungsgetriebe eignet sich für eine Frontquerbauweise in einem Kraftfahrzeug.

Aus der DE 10 2007 049 265 A1 ist ein Doppelkupplungsgetriebe mit zwei Reibkupplungen, zwei Getriebeeingangswellen und zwei Triebwellen bekannt. Den Getriebeeingangswellen sind jeweils zwei Festräder zugeordnet, wobei entsprechende kämmende Losräder auf den Triebwellen angeordnet sind. Es sind insgesamt vier doppelt wirkende Synchronisiervorrichtungen zwischen jeweils benachbarten Losrädern auf den Triebwellen angeordnet. Hierdurch sind vier Doppelradebenen realisiert. Es ergeben sich mindestens acht lastschaltbare Vorwärtsgänge und zumindest ein Rückwärtsgang.

Aus der WO 2012/055382 A1 ist ein Doppelkupplungsgetriebe für Front-Quer-Anwendungen bekannt. Es sind zwei Reibkupplungen, zwei Getriebeeingangswellen und zwei Triebwellen vorgesehen. Auf der zweiten, äußeren Getriebeeingangswelle ist eine weitere Welle derart angeordnet, dass sich die beiden Getriebeeingangswellen und die weitere Welle koaxial zueinander erstrecken. Auf der weiteren Welle sind zwei Festräder angeordnet. Die weitere Welle lässt sich über eine Synchronisiervorrichtung drehfest mit der äußeren Getriebeeingangswelle verbinden. Die innere und die äußere Getriebeeingangswelle verfügen zudem über jeweils ein Festrad. Hierdurch ergeben sich insgesamt vier Radebenen, die als Doppelradebenen ausgebildet sind und mit entsprechenden, den Triebwellen zugeordneten Zahnrädern kämmen. Auf einer der Triebwellen ist dabei eine Hohlwelle gelagert, wobei die Hohlwelle über eine Synchronisiervorrichtung mit der Triebwelle drehfest verbindbar ist. Auf der Hohlwelle ist ein Festrad und ein Losrad angeordnet. Bei diesem Doppelkupplungsgetriebe sind mehrere Windungsgänge realisierbar, wobei sich acht beziehungsweise neun lastschaltbare Vorwärtsgänge realisieren lassen. Die Stufensprünge der Übersetzung der ersten sechs Vorwärtsgänge sind dabei abnehmend.

Aus der gattungsbildenden DE 102011 108 452 A1 ist ein Doppelkupplungsgetriebe bekannt, dass drei Doppelradebenen aufweist, wobei eine der Doppelradebenen drei einzelne Losräder aufweist, wobei eines dieser Losräder der beiden Getriebeeingangswellen zugeordnet ist und die beiden anderen Losräder den beiden Triebwellen zugeordnet sind.

Die gattungsbildenden Doppelkupplungsgetriebe sind noch nicht optimal ausgebildet. Insbesondere hinsichtlich der Übersetzungsstufen zwischen den einzelnen Vorwärtsgängen sind die gattungsbildenden Doppelkupplungsgetriebe noch nicht optimal ausgebildet. Wünschenswert ist näherungsweise eine abnehmende, insbesondere progressive Übersetzungsstufung bereitzustellen.

Der Erfindung liegt daher die Aufgabe zugrunde, das eingangs genannte Doppelkupplungsgetriebe derart auszugestalten und weiterzubilden, so dass ein kompakt bauendes Doppelkupplungsgetriebe mit einer insbesondere progressiven Übersetzungsstufung bereitgestellt ist.

Diese der Erfindung zugrunde liegende Aufgabe wird nun durch ein Doppelkupplungsgetriebe mit den Merkmalen des Patentanspruches 1 gelöst. Auf mindestens einer der beiden Triebwellen ist eine Hohlwelle gelagert, wobei die Hohlwelle über eine Kopplungsvorrichtung mit der entsprechenden Triebwelle drehfest verbindbar ist. Auf der Hohlwelle ist mindestens ein Losrad und mindestens eine weitere Kopplungsvorrichtung angeordnet. Dies hat den Vorteil, dass Kopplungsvorrichtungen mehrfach nutzbar sind. Durch den vorgeschlagenen Aufbau sind bauraumsparend Zahnradstufen und Kopplungsvorrichtungen mehrfach nutzbar, wobei sich dennoch eine progressive Übersetzungsstufung näherungsweise realisieren lässt. Eine der Doppelradebenen ist zumindest mit einer Zahnradstufe für zwei unterschiedliche Windungsgänge nutzbar. Dieser Doppelradebene ist vorzugsweise die Zahnradstufe des fünften Vorwärtsganges zugeordnet, wobei diese Zahnradstufe an zwei Windungsgängen beteiligt ist. Die eine Doppelradebene weist die Zahnradstufen des dritten Vorwärtsganges und des Rückwärtsganges auf. Die andere Doppelradebene weist die Zahnradstufen des fünfte und siebten Vorwärtsganges auf. Der erste, achte und zehnte Vorwärtsgang sind als Windungsgang ausgebildet. Der Leistungsfluss des ersten Vorwärtsganges windet sich über die Zahnradstufen des dritten Vorwärtsganges, des vierten Vorwärtsganges und des zweiten Vorwärtsganges. Der Leistungsfluss des achten Vorwärtsganges windet sich über die Zahnradstufen des sechsten, fünften und siebten Vorwärtsganges. Der Leistungsfluss des zehnten Vorwärtsganges windet sich über die Zahnradstufen des sechsten, fünften und neunten Vorwärtsganges. Die Getriebeeingangswellen sind insbesondere koaxial zueinander angeordnet. Die zweite Getriebeeingangswelle ist vorzugsweise hohl ausgebildet. Die beiden Doppelradebenen sind vorzugsweise der äußeren Getriebeeingangswelle zugeordnet. Es sind vorzugsweise insgesamt sechs Radebenen mit genau zwei Doppelradebenen vorgesehen. Eine der Doppelradebenen kann ein Zwischenrad zur Realisierung eines Rückwärtsganges aufweisen. Alternativ können die zwei der entsprechenden Doppelradebene und den Triebwellen zugeordneten Losräder miteinander gekoppelt werden zur Drehumkehrung und damit zur Bereitstellung eines Rückwärtsganges. Es sind insbesondere zehn Vorwärtsgänge vorgesehen. Dabei können sieben Vorwärtsgänge vorgesehen werden, die jeweils nur eine Zahnradstufe nutzen. Insbesondere der zweite, dritte, vierte, fünfte, sechste, siebte und neunte Vorwärtsgang sind nicht als Windungsgang ausgebildet, das heißt der Leistungsfluss erstreckt sich über jeweils nur eine Zahnradpaarung und eine Triebwelle. Der erste, achte und zehnte Vorwärtsgang können insbesondere als Windungsgang ausgebildet sein. Jeder der beiden Triebwellen ist ein Abtriebsritzel zugeordnet, wobei die beiden Abtriebsritzel vorzugsweise unterschiedliche Größen aufweisen. Das Doppelkupplungsgetriebe ist kurz bauend und für einen Frontquereinbau geeignet. Mindestens eine der Kopplungsvorrichtungen kann als eine Synchronisiervorrichtung realisiert werden, in einer vorteilhafte Variante sind alle Kopplungsvorrichtungen als Synchronisiervorrichtung realisiert. Die eingangs genannten Nachteile sind daher vermieden und entsprechende Vorteile sind erzielt.

Es gibt nun eine Vielzahl von Möglichkeiten, das erfindungsgemäße Doppelkupplungsgetriebe in vorteilhafter Art und Weise auszugestalten und weiterzubilden. Hierfür darf zunächst auf die dem Patentanspruch 1 nachgeordneten Patentansprüche verwiesen werden. Im Folgenden werden vier bevorzugte Ausgestaltungen des Doppelkupplungsgetriebes anhand der Zeichnung und der dazugehörigen Beschreibung näher erläutert.

In der Zeichnung zeigt:
- Fig. 1: in einer schematischen Darstellung ein erstes Doppelkupplungsgetriebe,
- Fig. 2: in einer Tabelle ein Schaltschema des ersten Doppelkupplungsgetriebes,
- Fig. 3: in einer schematischen Darstellung ein zweites Doppelkupplungsgetriebe,
- Fig. 4: in einer Tabelle ein Schaltschema des zweiten Doppelkupplungsgetriebes,
- Fig. 5: in einer schematischen Darstellung ein drittes Doppelkupplungsgetriebe,
- Fig. 6: in einer Tabelle ein Schaltschema des dritten Doppelkupplungsgetriebes,
- Fig. 7: in einer schematischen Darstellung ein viertes Doppelkupplungsgetriebe, und
- Fig. 8: in einer Tabelle ein Schaltschema des vierten Doppelkupplungsgetriebes.

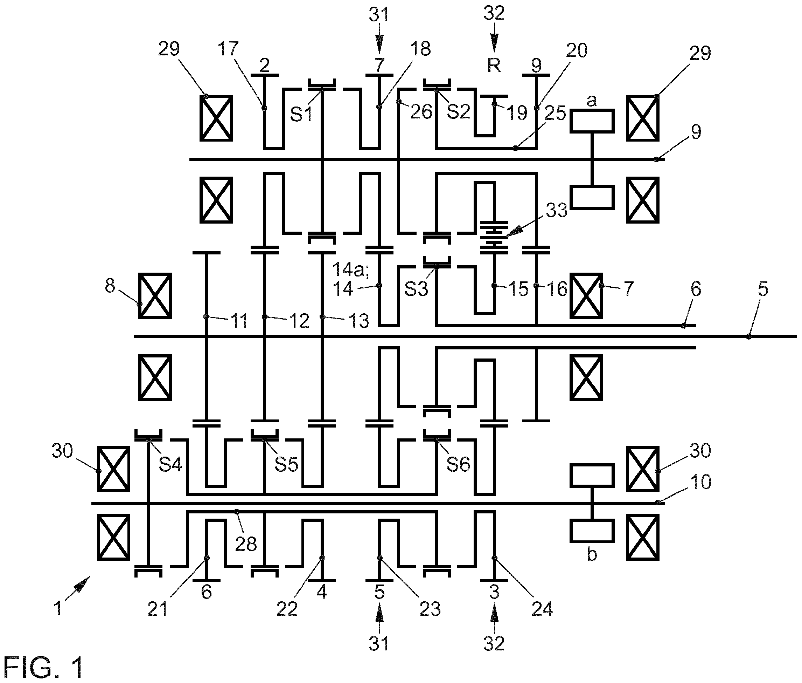

In den Fig. 1, 3, 5 und 7 sind vier Doppelkupplungsgetriebe 1, 2, 3, 4 für ein nicht dargestelltes Kraftfahrzeug gut zu erkennen. Es werden zunächst die Gemeinsamkeiten der Doppelkupplungsgetriebe 1 bis 4 beschrieben und anschließend werden die Unterschiede der Doppelkupplungsgetriebe 1 bis 4 näher erläutert.

Die Doppelkupplungsgetriebe 1 bis 4 weisen eine erste Getriebeeingangswelle 5 und eine zweite Getriebeeingangswelle 6 auf. Die beiden Getriebeeingangswellen 5, 6 sind koaxial zueinander angeordnet. Die zweite Getriebeeingangswelle 6 ist als Hohlwelle ausgebildet, wobei die erste Getriebeeingangswelle 5 die zweite Getriebeeingangswelle 6 entsprechend durchgreift. Die erste Getriebeeingangswelle 5 kann als Vollwelle ausgebildet sein. Es ist jedoch auch denkbar, dass die erste Getriebeeingangswelle 5 ebenfalls als Hohlwelle ausgebildet ist. Die zweite Getriebeeingangswelle 6 ist mit einem Lager 7 an ihrem nicht näher bezeichneten Außenumfang gelagert. Die erste Getriebeeingangswelle 5 ist an ihrem kupplungsfernen Ende mittels eines Lagers 8 gelagert. Die erste Getriebeeingangswelle 5 ist über eine erste Reibkupplung (nicht dargestellt) und die zweite Getriebeeingangswelle 6 ist über eine zweite Reibkupplung (nicht dargestellt) mit einem Antriebsmotor (nicht dargestellt) verbindbar oder verbunden. Je nach Schalten der Reibkupplungen kann so das Antriebsmoment auf die erste Getriebeeingangswelle 5 oder auf die zweite Getriebeeingangswelle 6 übertragen werden.

Das Doppelkupplungsgetriebe 1, 2, 3, 4 weist jeweils zwei Triebwellen 9, 10 auf. Das Doppelkupplungsgetriebe 1 bis 4 weist nun jeweils mehrere Zahnräder auf, die die Triebwellen 9, 10 mit der entsprechenden Getriebeeingangswelle 5, 6 in Form von Zahnradpaarungen verbinden. Die Zahnräder 11, 12, 13 sind als Festräder ausgebildet und der inneren, ersten Getriebeeingangswelle 5 zugeordnet. Die Zahnräder 11, 12, 13 sind drehfest auf der Getriebeeingangswelle 5 angeordnet beziehungsweise ausgebildet.

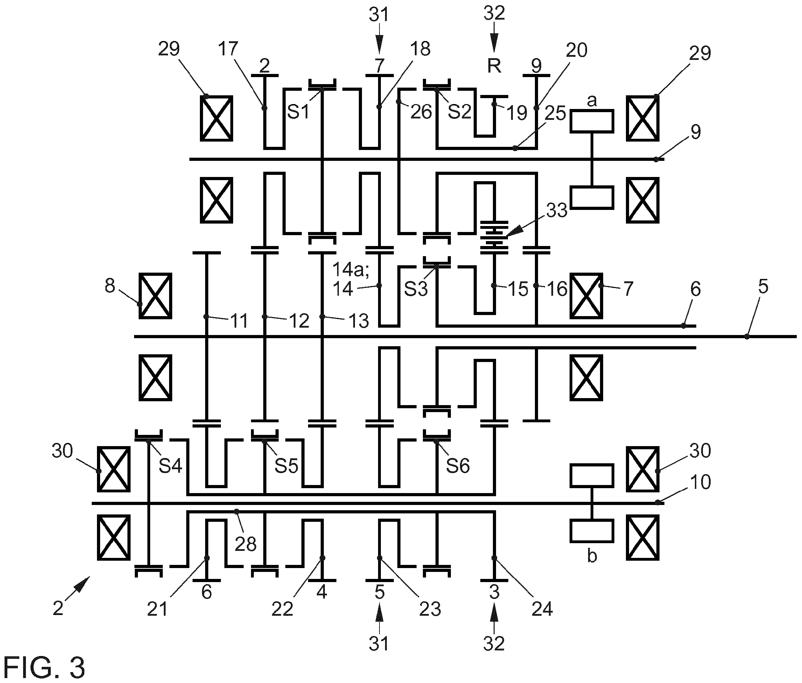

Der zweiten Getriebeeingangswelle 6 sind ebenfalls drei Zahnräder, nämlich die Zahnräder 14, 15, 16 zugeordnet. Das kupplungsnahe, in den Fig. 1, 3, 5 und 7 jeweils rechts dargestellte Zahnrad 16 ist als Festrad ausgebildet. Das mittlere, der zweiten Getriebeeingangswelle 6 zugeordnete Zahnrad 15 ist als Losrad (hier nicht näher bezeichnet) ausgebildet. Dieses Losrad "15" beziehungsweise Zahnrad 15 ist dabei auf der zweiten Getriebeeingangswelle 6 angeordnet. Das kupplungsferne, in den Fig. 1, 3, 5 und 7 links dargestellte Zahnrad 14 ist im Fall der Doppelkupplungsgetriebe 1 und 2 (vgl. Fig. 1 und 3) als Losrad 14a ausgebildet und dabei auf der inneren, ersten Getriebeeingangswelle 5 angeordnet. Dieses Losrad 14a ist der zweiten, äußeren Getriebeeingangswelle 6 zugeordnet, da es über eine Kopplungsvorrichtung S3 drehfest mit der äußeren Getriebeeingangswelle 6 verbindbar ist.

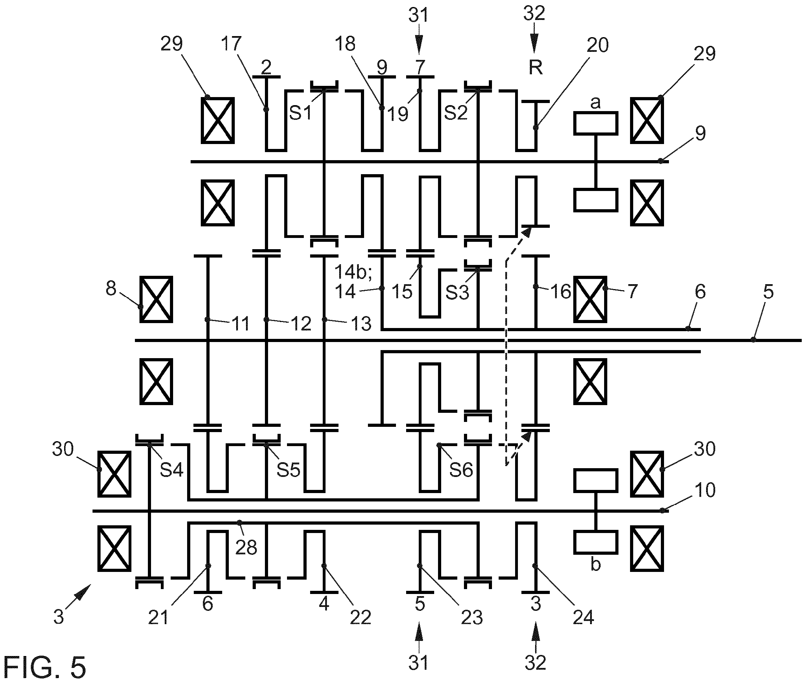

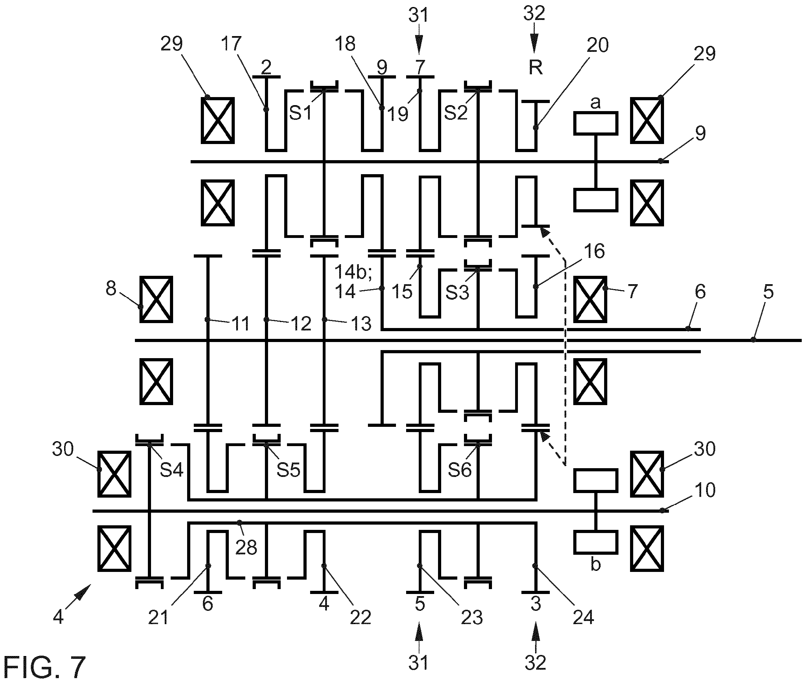

Im Fall der Doppelkupplungsgetriebe 3, 4 (vgl. Fig. 5, 7) ist das kupplungsferne, auf der zweiten Getriebeeingangswelle 6 angeordnete Zahnrad 14 als Festrad 14b ausgebildet. Das mittlere Losrad 15 ist ebenfalls über die Kopplungsvorrichtung S3 drehfest mit der zweiten Getriebeeingangswelle 6 verbindbar.

Die Triebwelle 9 weist die Zahnräder 17, 18, 19 und 20 auf, die "lose" der Triebwelle 9 zugeordnet, also als Losräder ausgebildet sind. Die Zahnräder 17, 18, 20 (vgl. Fig. 1, 3) bzw. 17, 18, 19, 20 (Fig. 5, 7) sind mittels der beiden Kopplungsvorrichtungen S1, S2 drehfest mit der Triebwelle 9 verbindbar. Das erste, kupplungsferne Zahnrad 17 kämmt dabei mit dem als Festrad ausgebildeten, mittleren, der ersten Getriebeeingangswelle 5 zugeordneten Zahnrad 12. Zwischen den beiden benachbarten Zahnrädern 17, 18 ist in der Ebene des Zahnrades 13 die Kopplungsvorrichtung S1 auf der ersten Triebwelle 9 angeordnet. Die Kopplungsvorrichtung S1 ist doppelt wirkend ausgebildet. Das Zahnrad 18 ist ebenfalls als Losrad ausgebildet und über die Kopplungsvorrichtung S1 mit der ersten Triebwelle 9 verbindbar.

In der in Fig. 1 und Fig. 3 dargestellten Ausgestaltung ist im Wesentlichen neben dem Zahnrad 18 die Kopplungsvorrichtung S2 in der Ebene der Kopplungsvorrichtung S3 angeordnet. In der in Fig. 5 und Fig. 7 dargestellten Ausgestaltung ist neben dem Zahnrad 18 das entsprechende Zahnrad 19 angeordnet. Hier kämmt das Zahnrad 19 mit dem mittleren, der zweiten Getriebeeingangswelle 6 zugeordneten Zahnrad 15 (vgl. Fig. 5, 7). Das Zahnrad 20 kämmt mit dem als Festrad ausgebildeten, kupplungsnahen, der zweiten Getriebeeingangswelle 6 zugeordneten Zahnrad 16 (vgl. Fig. 1, 3).

In der in Fig. 1 und Fig. 3 dargestellten Ausgestaltung des Doppelkupplungsgetriebes 1, 2 weist das kupplungsnahe Zahnrad 20 einen Hohlwellenabschnitt 25 auf, wobei der Hohlwellenabschnitt 25 das Zahnrad 20 mit der Kopplungsvorrichtung S2 verbindet. Zwischen der Kopplungsvorrichtung S2 und dem Zahnrad 20 auf dem Hohlwellenabschnitt 25 ist das Zahnrad 19 lose angeordnet. Auf der ersten Triebwelle 9 ist ferner ein drehfest angeordneter Kupplungskörper 26 vorgesehen, wobei der Kupplungskörper 26 durch Betätigung der doppelt wirkenden Kopplungsvorrichtung S2 in eine Richtung drehfest mit dem Hohlwellenabschnitt 25 und damit mit dem Zahnrad 20 verbindbar ist.

Auf der ersten Triebwelle 9 ist ein Abtriebsritzel a drehfest angeordnet. Das Abtriebsritzel a ist nah zum Zahnrad 20 angeordnet (vgl. Fig. 1, 3, 5, 7).

Auf der zweiten Triebwelle 10 sind vier Zahnräder 21 bis 24 angeordnet. Kupplungsfern ist die Synchronvorrichtung S4, im wesentlichen in der Ebene des kupplungsfernen Lagers 8 der ersten Getriebeeingangswelle 5 angeordnet. Die Zahnräder 21, 22, 23, 24 sind durch Betätigung der Kopplungsvorrichtung S4, S5 und S6 drehfest miteinander beziehungsweise drehfest mit der zweiten Triebwelle 10 verbindbar, wie im folgenden beschrieben:
Auf der Triebwelle 10 ist eine Hohlwelle 28 angeordnet. In der in Fig. 1 und in Fig. 5 dargestellten Ausgestaltung des Doppelkupplungsgetriebes 1 und 3 trägt die Hohlwelle 28 die Zahnräder 21, 22, 23 sowie die beiden Kopplungsvorrichtungen S5 und S6. Das Zahnrad 24 ist dabei neben der Hohlwelle 28, nämlich kupplungsnah neben der Hohlwelle 28 lose auf der Triebwelle 10 angeordnet. Denkbar ist auch, dass die Hohlwelle 28 verlängert ausgebildet ist und das Zahnrad 24 lose auf dem Endbereich der Hohlwelle 28 drehbar gelagert ist.

In den Fig. 3 und 7 sind die Doppelkupplungsgetriebe 2 und 4 dargestellt, wobei die Zahnräder 21 bis 24 der Hohlwelle 28 zugeordnet sind beziehungsweise von der Hohlwelle 28 getragen werden. Das Zahnrad 24 ist dabei drehfest mit der Hohlwelle 28 verbunden.

In der in Fig. 1 und 5 dargestellten Ausgestaltung des Doppelkupplungsgetriebes 1 und 3 ist das als Losrad ausgebildete Zahnrad 24 mit der Kopplungsvorrichtung S6 drehfest mit der Hohlwelle 28 verbindbar.

Durch Betätigen der Kopplungsvorrichtung S5 ist wahlweise entweder das Zahnrad 21 oder das Zahnrad 22 drehfest mit der Hohlwelle 28 verbindbar (Fig. 1, 3, 5, 7). Das Zahnrad 23 ist durch Betätigen der Kopplungsvorrichtung S6 drehfest mit der Hohlwelle 28 verbindbar. Der zweiten Triebwelle 10 ist ferner ein Abtriebsritzel b zugeordnet. Die erste Triebwelle 9 ist durch zwei Lager 29 gelagert und die zweite Triebwelle 10 ist durch zwei Lager 30 gelagert.

Die Zahnräder 11 bis 24 sind nun derart kämmend angeordnet, dass mehrere Vorwärtsgänge mittels der Kopplungsvorrichtungen S1 bis S6 schaltbar sind. Mindestens einer der Vorwärtsgänge ist als Windungsgang ausgebildet. Ein Leistungsfluss des Windungsganges windet sich über mehrere Zahnradstufen. Jeweils zwei kämmend angeordnete Zahnräder bilden eine Zahnradstufe. Die Zahnräder 11 und 21 sind kämmend angeordnet und bilden eine dem sechsten Vorwärtsgang zugeordnete Zahnradstufe. Die Zahnräder 12 und 17 sind kämmend angeordnet und bilden eine Zahnradstufe, die dem zweiten Vorwärtsgang zugeordnet ist. Die Zahnräder 13 und 22 sind kämmend angeordnet und bilden eine Zahnradstufe, die einem vierten Vorwärtsgang zugeordnet ist.

Im Folgenden darf auf die Doppelkupplungsgetriebe 1 und 2 anhand von den Fig. 1 und 3 näher eingegangen werden:
Die Zahnräder 14 und 23 sind kämmend zueinander angeordnet, wobei diese eine Zahnradstufe bilden, die einem fünften Vorwärtsgang zugeordnet ist (Fig. 1, 3). Das Zahnrad 14 bildet ferner mit dem Zahnrad 18 eine weitere Zahnradstufe. In der in Fig. 1 und 3 dargestellten Ausgestaltung des Doppelkupplungsgetriebes 1 und 2 ist diese Zahnradstufe einem siebten Vorwärtsgang zugeordnet.

Das Zahnrad 15 kämmt mit dem Zahnrad 24 und bildet eine Zahnradstufe, die dem dritten Vorwärtsgang zugeordnet ist.

Das Zahnrad 15 dient ferner zum Bereitstellen des Antriebselementes für den Rückwärtsgang. Für den Rückwärtsgang ist das Zahnrad 19 jeweils beteiligt. In der in Fig. 1 und 3 dargestellten Ausgestaltung des Doppelkupplungsgetriebes 1, 2 ist ein Zwischenrad 33 vorgesehen, dass im kämmenden Eingriff mit dem Zahnrad 15 und dem Zahnrad 19 steht. In der in Fig. 1 und 3 dargestellten Ausgestaltung ist eine Zahnradstufe für einen neunten Vorwärtsgang durch die beiden Zahnräder 16 und 20 gebildet.

Im Folgenden darf nun auf die Doppelkupplungsgetriebe 3, 4 anhand von den Fig. 5 und 7 näher eingegangen werden. Die Zahnräder 14 und 18 sind kämmend zueinander angeordnet und bilden eine Zahnradstufe, die einem neunten Vorwärtsgang zugeordnet ist. Diese Zahnradstufe ist jedoch nicht Teil einer Doppelradebene. Die Zahnräder 15 und 19 bilden eine kämmende Zahnradstufe, die einem siebten Vorwärtsgang zugeordnet ist. Die Zahnräder 15 und 23 bilden eine Zahnradstufe, die einem fünften Vorwärtsgang zugeordnet ist. Die Zahnräder 15, 19 und 23 bilden eine Doppelradebene 31. Die Zahnräder 16 und 24 bilden eine Zahnradstufe, die einem dritten Vorwärtsgang zugeordnet ist. Die Zahnräder 24 und 20 stehen ebenfalls in einem kämmenden Eingriff, wie es durch den gestrichelten Pfeil (nicht näher bezeichnet) angedeutet ist. Hierdurch ist eine dem Rückwärtsgang zugeordnete Zahnradstufe gebildet. Die Zahnräder 16, 24, 20 bilden eine weitere Doppelradebene 32. In diesem Fall bildet das Zahnrad 16, das Zahnrad 24 und das Zahnrad 20 die entsprechende Zahnradstufe, die dem Rückwärtsgang zugeordnet ist. Diese Ausgestaltung ist kleiner bauend als die der Doppelkupplungsgetriebe 1, 2 (Fig. 1, 3) und daher bevorzugt. In den beiden Varianten erfolgt ein Drehrichtungswechsel zur Bereitstellung eines Rückwärtsganges. Es ist jedoch auch denkbar, in der in Fig. 1 und 3 dargestellten Ausgestaltung des Doppelkupplungsgetriebes 1, 2 beispielsweise auf ein Zwischenrad zu verzichten und dafür einen kämmenden Eingriff zwischen dem Zahnrad 24 und dem Zahnrad 19 herzustellen.

Die eingangs genannten Nachteile sind nun dadurch vermieden, dass mindestens eine der Doppelradebenen 31 bzw. 32 drei einzelne Losräder 14, 18, 23 bzw. 15, 19, 24 (Fig. 1, 3); 15, 19, 23 bzw. 16, 20, 24 (Fig. 5, 7) aufweist, wobei eines dieser Losräder 14, 15 einer der Getriebeeingangswellen 5, 6, der zweiten Getriebeeingangswelle 6 zugeordnet ist und die beiden anderen Losräder 18, 23; 19, 23 bzw. 24 jeweils einer der beiden Triebwellen 9, 10 zugeordnet sind. Wenn beide Doppelradebenen drei einzelne Losräder aufweisen, sind die beiden der Getriebeeingangswelle zugeordneten Losräder 14, 15 der gleichen Getriebeeingangswelle zugeordnet, in diesem konkreten Fall der zweiten Getriebeeingangswelle 6.Hierdurch ist ein kompakt bauendes Doppelkupplungsgetriebe 1, 2, 3, 4 mit insgesamt zehn Vorwärtsgängen und vorzugsweise einer näherungsweise progressiven Übersetzungsstufung bereitgestellt. Dieses Doppelkupplungsgetriebe 1, 2, 3, 4 ist insbesondere für einen Front-Quereinbau in einem Kraftfahrzeug geeignet. Es sind insgesamt sechs Radebenen vorgesehen, wobei von diesen Radebenen zwei als Doppelradebenen 31, 32 ausgebildet sind. Hierdurch ist ein axial kurz bauendes Doppelkupplungsgetriebe 1 bis 4 bereitgestellt.

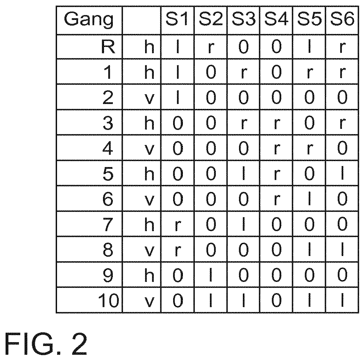

Im Folgenden dürfen die Schaltzustände des Doppelkupplungsgetriebes 1 anhand von der Fig. 2 näher erläutert werden. Die Kopplungsvorrichtungen S1 bis S6 weisen eine in den Fig. 1, 3, 5 und 7 linke Schaltstellung, eine rechte Schaltstellung und eine Neutralstellung auf. In der Tabelle ist die linke, kupplungsferne Schaltstellung jeweils durch ein "l" und die rechte, kupplungsnahe Schaltstellung durch ein "r" gekennzeichnet. Die Neutralstellung ist durch eine "0" gekennzeichnet. Erfolgt der Antrieb über die äußere Getriebeeingangswelle 6, ist in der zweiten Spalte ein "h" angegeben. Erfolgt der Antrieb über die innere, erste Getriebeeingangswelle 5, ist in der zweiten Spalte ein "v" angegeben. Benachbarte Vorwärtsgänge sind unterschiedlichen Getriebeeingangswellen 5, 6 zugeordnet, so dass die Vorwärtsgänge entsprechend schaltbar, insbesondere lastschaltbar sind.

Wenn der Rückwärtsgang eingelegt ist, wird das Antriebsmoment über die äußere Getriebeeingangswelle 6 übertragen. Die Kopplungsvorrichtung S1 ist kupplungsfern, das heißt nach links geschaltet und verbindet damit das Zahnrad 17 mit der ersten Triebwelle 9. Die Kopplungsvorrichtung S2 ist kupplungsnah (nach rechts) geschaltet und verbindet so das Zahnrad 19 mit dem Zahnrad 20. Die Schaltvorrichtung S5 ist kupplungsfern, nach links geschaltet, so dass die Hohlwelle 28 drehfest mit dem Zahnrad 21 verbunden ist. Das Antriebsmoment wird nun ausgehend von der äußeren Getriebeeingangswelle 6 zunächst auf das Zahnrad 16 und damit auf das kämmend dazu angeordnete Zahnrad 20 und damit auf die Zahnradstufe des Rückwärtsganges übertragen. Da die Kopplungsvorrichtung S2 geschlossen ist, wird das dem Rückwärtsgang zugeordnete Zahnrad 19 und damit auch das Zwischenrad 33 sowie das Losrad 15 auf der äußeren Getriebeeingangswelle 6 angetrieben. Ferner wird das ebenfalls zur Doppelradebene 32 zugehörige Zahnrad 24 auf der anderen, zweiten Triebwelle 10, und damit die Zahnradstufe des neunten Vorwärtsganges bzw. des dritten Vorwärtsganges angetrieben. Über die Kopplungsvorrichtung S6 ist das Zahnrad 24 drehfest mit der Hohlwelle 28 verbunden. Da auch das Zahnrad 21 mittels der Kopplungsvorrichtung S5 mit der Hohlwelle 28 verbunden ist, wird das Zahnrad 11 auf der ersten Getriebeeingangswelle 5 angetrieben. Das Zahnrad 12 der ersten Getriebeeingangswelle 5 treibt nun das Zahnrad 17 auf der ersten Triebwelle 9 an, wobei über die Kopplungsvorrichtung S1 das Antriebsmoment schließlich zum Abtriebsritzel a geleitet wird. Der Rückwärtsgang ist hier als Windungsgang ausgebildet, wobei der Leistungsfluss sich über die dem neunten, dritten, sechsten und zweiten Vorwärtsgang zugeordneten Zahnradstufen erstreckt. Alternativ kann der Rückwärtsgang dadurch realisiert sein, dass die Kopplungsvorrichtung S5 in der rechten Schaltstellung angeordnet wird, wobei der Leistungsfluss sich dabei über die dem neunten, dritten, vierten und zweiten Vorwärtsgang zugeordneten Zahnradstufen erstreckt. Vzw. kann das Doppelkupplungsgetriebe 1 dann auch mit zwei unterschiedlichen Rückwärtsgangstufen gemäß den beiden oben aufgeführten Alternativen ausgebildet sein bzw. diese beiden verschiedenen Rückwärtsgangstufen aufweisen.

Wenn der erste Vorwärtsgang eingelegt ist, wird das Antriebsmoment ebenfalls über die äußere Getriebeeingangswelle 6 eingeleitet. Die Kopplungsvorrichtung S1 ist in der linken, kupplungsfernen Schaltstellung, die Kopplungsvorrichtung S2 ist in der Neutralstellung und die Kopplungsvorrichtung S3 ist in der kupplungsnahen, rechten Schaltstellung angeordnet. Die Kopplungsvorrichtungen S5 und S6 befinden sich in der kupplungsnahen, rechten Schaltstellung. Hierdurch wird das Antriebsmoment von der äußeren Getriebeeingangswelle 6 über die Kopplungsvorrichtung S3 auf das Zahnrad 15, auf das Zahnrad 24 und über die Kopplungsvorrichtungen S6 und S5 (über die Hohlwelle 28) auf das Zahnrad 22 und damit auf die erste, innere Getriebeeingangswelle 5 übertragen. Die Kopplungsvorrichtung S1 überträgt ausgehend von dem Zahnrad 12 und 17 das Antriebsmoment auf die erste Triebwelle 9. Der erste Vorwärtsgang ist als Windungsgang ausgebildet. Der Leistungsfluss des ersten Vorwärtsgangs erstreckt sich über die Zahnradstufen des dritten, vierten und zweiten Vorwärtsganges.

Es ist denkbar, für den ersten Vorwärtsgang die Kopplungsvorrichtung S5 in der linken Schaltstellung anzuordnen. Der Leistungsfluss des ersten Vorwärtsgangs erstreckt sich dann über die Zahnradstufen des dritten, sechsten und zweiten Vorwärtsganges. Eine entsprechender Leistungsfluss ist auch bei den anderen Doppelkupplungsgetrieben 2, 3 und 4 möglich.

Wenn der zweite Vorwärtsgang eingelegt ist, wird das Antriebsmoment auf die erste Getriebeeingangswelle 5 übertragen. Die Kopplungsvorrichtung S1 befindet sich in der linken, kupplungsfernen Schaltstellung und verbindet somit das Zahnrad 17 mit der ersten Triebwelle 9. Alle anderen Kopplungsvorrichtungen S2 bis S6 sind in der Neutralstellung angeordnet. Ausgehend von der inneren Getriebeeingangswelle 5 wird das Antriebsmoment über das Zahnrad 12, das Zahnrad 17 auf die erste Triebwelle 9 und damit auf das Abtriebsritzel a übertragen. Der zweite Vorwärtsgang ist nicht als Windungsgang ausgebildet.

Wenn der dritte Vorwärtsgang eingelegt ist, wird das Antriebsmoment über die äußere Getriebeeingangswelle 6 übertragen. Die Kopplungsvorrichtungen S1, S2 und S5 befinden sich in der Neutralstellung, die Kopplungsvorrichtungen S3 und S4 befinden sich in der rechten, kupplungsnahen Schaltstellung, wodurch das Zahnrad 15 mit der äußeren Getriebeeingangswelle 6 drehfest verbunden ist und die Hohlwelle 28 drehfest mit der Triebwelle 10 verbunden ist. Ferner befindet sich die Kopplungsvorrichtung S6 in der kupplungsnahen Schaltstellung. Hierdurch ist das Zahnrad 24 ebenfalls mit der Hohlwelle 28 verbunden. Das Antriebsmoment wird von der äußeren Getriebeeingangswelle 6 auf das Zahnrad 15, das Zahnrad 24, die Hohlwelle 28 bzw. die Kopplungsvorrichtung S4 und damit auf die zweite Triebwelle 10 mit dem Abtriebsritzel b übertragen.

Wenn der vierte Vorwärtsgang eingelegt ist, wird das Antriebsmoment über die innere Getriebeeingangswelle 5 übertragen. Die Kopplungsvorrichtungen S1, S2, S3, S6 befinden sich in der Neutralstellung und die Kopplungsvorrichtungen S4 und S5 befinden sich in der kupplungsnahen, rechten Schaltstellung. Hierdurch wird das Antriebsmoment über die Zahnräder 13, 22, die Hohlwelle 28 auf die Triebwelle 10 übertragen.

Wenn der fünfte Vorwärtsgang eingelegt ist, wird das Antriebsmoment über die äußere Antriebswelle 6 übertragen. Die Kopplungsvorrichtungen S1, S2, S5 befinden sich in der Neutralstellung. Die Kopplungsvorrichtungen S3 und S6 befinden sich in der linken, kupplungsfernen Schaltstellung und die Kopplungsvorrichtung S4 befindet sich in der rechten, kupplungsnahen Schaltstellung. Hierdurch wird das Antriebsmoment auf das Zahnrad 14, das Zahnrad 23, die Hohlwelle 28, die Kopplungsvorrichtung S4 und damit die Triebwelle 10 übertragen.

Wenn der sechste Vorwärtsgang eingelegt ist, befindet sich die Kopplungsvorrichtung S4 in der rechten Schaltstellung und die Kopplungsvorrichtung S5 in der linken Schaltstellung. Hierdurch wird das Antriebsmoment von der inneren Getriebeeingangswelle 5 auf das Zahnrad 11 und 21, die Hohlwelle 28 und auf die Triebwelle 10 übertragen.

Wenn der siebte Vorwärtsgang eingelegt ist, wird das Antriebsmoment auf die äußere Antriebswelle 6 übertragen. Die Kopplungsvorrichtung S1 ist in der rechten Schaltstellung angeordnet und die Kopplungsvorrichtungen S2, S4, S5, S6 befinden sich in der Neutralstellung. Die Kopplungsvorrichtung S3 befindet sich in der linken Schaltstellung. Hierdurch wird das Antriebsmoment von der Getriebeeingangswelle 6 auf das Zahnrad 14, das Zahnrad 18 und von da aus auf die Triebwelle 9 übertragen.

Wenn nun der achte Vorwärtsgang eingelegt ist, wird das Antriebsmoment über die innere Getriebeeingangswelle 5 übertragen. Die Kopplungsvorrichtung S1 befindet sich in der rechten Schaltstellung und die Kopplungsvorrichtungen S2 bis S4 befinden sich in der Neutralstellung und die Kopplungsvorrichtungen S5, S6 sind in der linken Schaltstellung angeordnet. Hierdurch wird das Antriebsmoment von der inneren Antriebswelle auf die Hohlwelle 28 und von da aus auf die Doppelradebene 31 mit dem Zahnrad 18 und von da aus auf die erste Triebwelle 9 übertragen. Der achte Vorwärtsgang ist als Windungsgang ausgebildet. Der Leistungsfluss des achten Vorwärtsganges erstreckt sich über die Zahnradstufen des sechsten, fünften und siebten Vorwärtsgangs.

Zur Schaltung des neunten Vorwärtsganges ist die Kopplungsvorrichtung S2 in der linken Schaltstellung angeordnet. Alle anderen Kopplungsvorrichtungen befinden sich in der Neutralstellung. Das Antriebsmoment wird von der äußeren Getriebeeingangswelle 6 auf das Zahnrad 16 und das Zahnrad 20 und von da aus über die Kopplungsvorrichtung S2 auf die erste Triebwelle 9 übertragen.

Wenn der zehnte Vorwärtsgang eingelegt ist, sind die Kopplungsvorrichtungen S2, S3, S5 und S6 in der linken Schaltstellung angeordnet und die anderen beiden Kopplungsvorrichtungen S1 und S4 sind in der Neutralstellung angeordnet. Das Antriebsmoment wird von der inneren Getriebeeingangswelle 5 über das Zahnrad 11 und das Zahnrad 21 auf die Hohlwelle 28 übertragen. Die Hohlwelle 28 treibt über die Kopplungsvorrichtung S6 das Zahnrad 23 und damit das Zahnrad 14 der Doppelradebene 31 an. Über die Kopplungsvorrichtung S3 wird schließlich das Zahnrad 16 und damit die zweite, äußere Getriebeeingangswelle 6 angetrieben, wodurch das Zahnrad 20 und damit der Hohlwellenabschnitt 25 angetrieben wird. Da die Kopplungsvorrichtung S2 geschlossen ist, wird schließlich die Triebwelle 9 angetrieben. Der Leistungsfluss des zehnten Vorwärtsgangs erstreckt sich über die Zahnradstufen des sechsten, fünften und neunten Vorwärtsgangs.

Es ist denkbar, für den zehnten Vorwärtsgang die Kopplungsvorrichtung S5 in der rechten Schaltstellung anzuordnen. Der Leistungsfluss erstreckt sich dann über die Zahnradstufen des vierten, fünften und neunten Vorwärtsganges. Dies ist bei allen vier Doppelkupplungsgetrieben 1 bis 4 möglich.

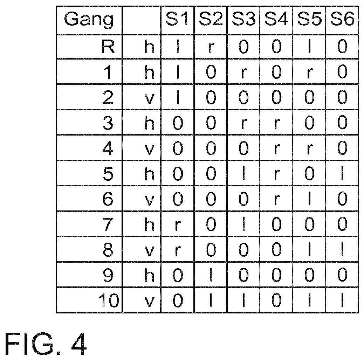

Im Folgenden darf auf die Schaltzustände des Doppelkupplungsgetriebes 2 anhand von Fig. 3 und Fig. 4 näher eingegangen werden. Die Schaltzustände der Vorwärtsgänge 2, 4, 5, 6, 7, 8, 9, 10 (also mit Ausnahme des ersten und dritten Vorwärtsganges bzw. des Rückwärtsganges) sind identisch wie beim Doppelkupplungsgetriebe 1 realisiert.

Zur Schaltung des Rückwärtsganges befinden sich die Kopplungsvorrichtungen S1 und S5 in der linken Schaltstellung, die Kopplungsvorrichtung S2 in der rechten Schaltstellung und die Kopplungsvorrichtungen S3, S4 und S6 in der Neutralstellung. Der Leistungsfluss wird von der äußeren Getriebeeingangswelle 6 auf die beiden Zahnräder 16, 20 über die Kopplungsvorrichtung S2 auf das Zahnrad 19, das Zwischenrad 33 und damit die zweite Doppelradebene 32 mit den weiteren Zahnrädern 15 und 24 auf die Hohlwelle 28 übertragen. Über die Kopplungsvorrichtung S5 wird das Zahnrad 21 und das Zahnrad 11 auf der inneren Getriebeeingangswelle 5 angetrieben. Hierdurch wird auch das Zahnrad 12 und damit das Zahnrad 17 angetrieben. Über die Kopplungsvorrichtung S1 wird schließlich die erste Triebwelle 9 angetrieben. Hierdurch wird der Leistungsfluss über die Zahnradstufen des neunten, dritten, sechsten und zweiten Vorwärtsgangs übertragen.

Alternativ kann der Rückwärtsgang dadurch realisiert sein, dass die Kopplungsvorrichtung S5 in der rechten Schaltstellung angeordnet wird, wobei der Leistungsfluss sich dabei über die dem neunten, dritten, vierten und zweiten Vorwärtsgang zugeordneten Zahnradstufen erstreckt.

Wenn der erste Vorwärtsgang eingelegt ist, ist die Kopplungsvorrichtung S1 in der linken Schaltstellung angeordnet. Die Kopplungsvorrichtungen S2, S4 und S6 sind in der Neutralstellung angeordnet. Die Kopplungsvorrichtungen S3 und S5 sind in der rechten Schaltstellung angeordnet. Der Leistungsfluss wird hier wiederum über die äußere Getriebeeingangswelle 6 übertragen, nämlich über die Kopplungsvorrichtung S3 auf das Zahnrad 15 und damit das Zahnrad 24. Über die Hohlwelle 28 wird die Kopplungsvorrichtung S5 und die beiden Zahnräder 22 und 13 und damit das Zahnrad 12 angetrieben. Das hierdurch angetriebene kämmende Zahnrad 17 treibt die Kopplungsvorrichtung S1 und damit die erste Triebwelle 9 an. Der Leistungsfluss des ersten Vorwärtsgangs erstreckt sich über die Zahnradstufen des dritten, vierten und zweiten Vorwärtsgangs.

Wenn der dritte Vorwärtsgang eingelegt ist, befinden sich die Kopplungsvorrichtungen S1, S2, S5 und S6 in der Neutralstellung und die Kopplungsvorrichtungen S3 und S4 in der rechten Schaltstellung. Das Antriebsmoment wird von der äußeren Antriebswelle 6 auf das Zahnrad 15, das Zahnrad 24, die Hohlwelle 28 und damit über die Kopplungsvorrichtung S4 die Triebwelle 10 angetrieben.

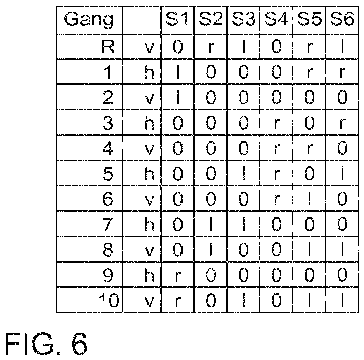

Im Folgenden darf auf den Leistungsfluss im Doppelkupplungsgetriebe 3 für jeden Fall der Vorwärtsgänge 1 bis 10 und den Rückwärtsgang anhand von Fig. 5 und von Fig. 6 näher eingegangen werden.

Wenn der Rückwärtsgang eingelegt ist, wird das Antriebsmoment über die innere, erste Getriebeeingangswelle 5 übertragen. Die Kopplungsvorrichtungen S1 und S4 sind in der Neutralstellung angeordnet. Die Kopplungsvorrichtungen S2 und S5 sind in der rechten Schaltstellung angeordnet. Die Kopplungsvorrichtungen S3 und S6 sind in der linken Schaltstellung angeordnet. Hierdurch wird der Leistungsfluss von der ersten Getriebeeingangswelle 5 über die beiden Zahnräder 13, 22, über die Kopplungsvorrichtung S5 auf die Hohlwelle 28, über die Kopplungsvorrichtung S6, auf die Zahnräder 23, 15, über die Kopplungsvorrichtung S3, auf die Zahnräder 16, 24 und 20, und über die Kopplungsvorrichtung S2 auf die Triebwelle 9 übertragen. Der Leistungsfluss windet sich über die Zahnradstufen des vierten und fünften Vorwärtsgangs.

Zur Schaltung des ersten Vorwärtsganges, wird das Antriebsmoment über die äußere, zweite Getriebeeingangswelle 6 übertragen. Die Kopplungsvorrichtung S1 ist in der linken Schaltstellung angeordnet. Die Kopplungsvorrichtungen S2, S3, S4 befinden sich in der Neutralstellung. Die Kopplungsvorrichtungen S5, S6 befinden sich in der rechten Schaltstellung. Hierdurch wird der Leistungsfluss von der äußeren Getriebeeingangswelle 6 über die beiden Zahnräder 16, 24, die Kopplungsvorrichtung S6 auf die Hohlwelle 28 und über die Kopplungsvorrichtung S5 auf das Zahnrad 22, das Zahnrad 13, das Zahnrad 12, das Zahnrad 17, die Kopplungsvorrichtung S1 und schließlich auf die Triebwelle 9 übertragen. Der Leistungsfluss windet sich über die Zahnradstufen des dritten, vierten und zweiten Vorwärtsgangs.

Wenn der zweite Vorwärtsgang eingelegt ist, wird das Antriebsmoment über die innere, erste Getriebeeingangswelle 5 übertragen. Die erste Kopplungsvorrichtung S1 befindet sich in der linken Schaltstellung, die restlichen Kopplungsvorrichtungen S2 bis S6 befinden sich in der Neutralstellung. Hierdurch wird der Leistungsfluss von der inneren Antriebswelle 5 auf das Zahnrad 12, das Zahnrad 17, die Kopplungsvorrichtung S1 und dann auf die Triebwelle 9 übertragen.

Wenn der dritte Vorwärtsgang eingelegt ist, wird der Leistungsfluss über die äußere, zweite Getriebeeingangwelle 6 übertragen. Die Kopplungsvorrichtungen S4, S6 sind in der rechten Schaltstellung angeordnet und die restlichen Kopplungsvorrichtungen sind in der Neutralstellung angeordnet. Hierdurch wird der Leistungsfluss von der äußeren Getriebeeingangswelle 6 auf die beiden Zahnräder 16, 24, die Hohlwelle 28 und von da aus auf die Triebwelle 10 übertragen.

Wenn der vierte Vorwärtsgang eingelegt ist, wird der Leistungsfluss über die innere Getriebeeingangswelle 5 übertragen. Die Kopplungsvorrichtungen S4 und S5 befinden sich in der rechten Schaltstellung, die restlichen Kopplungsvorrichtungen befinden sich in der Neutralstellung. Hierdurch wird der Leistungsfluss von der inneren Getriebeeingangswelle 5 auf die beiden Zahnräder 13, 22, die Hohlwelle 28 und von da aus auf die Triebwelle 10 übertragen.

Wenn der fünfte Vorwärtsgang eingelegt ist, wird das Antriebsmoment über die äußere Getriebeeingangswelle 6 übertragen. Die Kopplungsvorrichtungen S1, S2 und S5 befinden sich in der Neutralstellung. Die Kopplungsvorrichtungen S3 und S6 befinden sich in der linken Schaltstellung, die Kopplungsvorrichtung S4 befindet sich in der rechten Schaltstellung. Der Leistungsfluss wird ausgehend von der Getriebeeingangswelle 6 über die Kopplungsvorrichtung S3 auf das Zahnrad 15, damit auf das Zahnrad 23, die Kopplungsvorrichtung S6, die Hohlwelle 28 und von da aus auf die Kopplungsvorrichtung S4 und damit auf die Triebwelle 10 übertragen.

Wenn der sechste Vorwärtsgang eingelegt ist, wird der Leistungsfluss über die innere Getriebeeingangswelle 5 übertragen. Die Kopplungsvorrichtungen S1, S2, S3, S6 sind in der Neutralstellung angeordnet. Die Kopplungsvorrichtung S4 ist in der rechten Schaltstellung angeordnet. Die Kopplungsvorrichtung S5 ist in der linken Schaltstellung angeordnet. Der Leistungsfluss wird über das Zahnrad 11 auf das Zahnrad 21, von da aus über die Kopplungsvorrichtung S5 auf die Hohlwelle 28 und über die Kopplungsvorrichtung S4 auf die Triebwelle 10 übertragen.

Wenn der siebte Vorwärtsgang eingelegt ist, wird der Leistungsfluss über die äußere Getriebeeingangswelle 6 übertragen. Die Kopplungsvorrichtungen S1, S4, S5, S6 befinden sich in der Neutralstellung. Die Kopplungsvorrichtungen S2 und S3 befinden sich in der linken Schaltstellung. Hierdurch wird der Leistungsfluss von der Getriebeeingangswelle 6 über die Kopplungsvorrichtung S3 auf das Zahnrad 15, das Zahnrad 19 und über die Kopplungsvorrichtung S2 auf die Triebwelle 9 übertragen.

Wenn der achte Vorwärtsgang eingelegt ist, wird der Leistungsfluss über die innere Getriebeeingangswelle 5 übertragen. Die Kopplungsvorrichtungen S1, S3, S4 befinden sich in der Neutralstellung. Die Kopplungsvorrichtungen S2, S5, S6 befinden sich in der linken Schaltstellung. Hierdurch wird der Leistungsfluss über die Zahnräder 11 und 21, die Kopplungsvorrichtung S5, die Hohlwelle 28, die Kopplungsvorrichtung S6, die Doppelradebene 31 mit den Zahnrädern 23, 15 und 19 über die Kopplungsvorrichtung S2 auf das Zahnrad 19 übertragen und über die Kopplungsvorrichtung S2 auf die Triebwelle 9. Der Leistungsfluss windet sich über die Zahnradstufen des sechsten, fünften und siebten Vorwärtsgangs.

Wenn der neunte Vorwärtsgang eingelegt ist, wird der Leistungsfluss über die äußere Getriebeeingangswelle 6 übertragen. Die Kopplungsvorrichtung S1 ist in der rechten Schaltstellung angeordnet, die restlichen Kopplungsvorrichtungen S2 bis S6 befinden sich in der Neutralstellung. Hierdurch wird der Leistungsfluss von der äußeren Getriebeeingangswelle 6 über die Zahnräder 14 und 18, die Kopplungsvorrichtung S1 auf die erste Triebwelle 9 übertragen.

Wenn der zehnte Vorwärtsgang eingelegt ist, wird der Leistungsfluss über die innere Getriebeeingangswelle 5 übertragen. Die Kopplungsvorrichtung S1 befindet sich in der rechten Schaltstellung. Die Kopplungsvorrichtungen S2 und S4 befinden sich in der Neutralstellung. Die Kopplungsvorrichtungen S3, S5 und S6 befinden sich in der linken Schaltstellung. Hierdurch wird der Leistungsfluss über die beiden Zahnräder 11, 21, über die Kopplungsvorrichtung S5 auf die Hohlwelle 28, die Kopplungsvorrichtung S6 auf die beiden Zahnräder 23, 15, über die Kopplungsvorrichtung S3 auf die äußere Getriebeeingangswelle 6 und damit auf das Festrad 14b und damit das Zahnrad 18 und die Kopplungsvorrichtung S1 auf die Triebwelle 9 übertragen. Der Leistungsfluss windet sich über die Zahnradstufen des sechsten, fünften und neunten Vorwärtsganges.

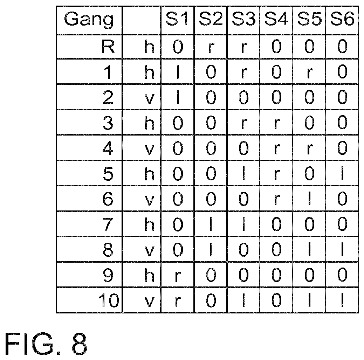

Im Folgenden darf auf die in Fig. 7 und Fig. 8 dargestellten Leistungsflüsse des Doppelkupplungsgetriebes 4 näher eingegangen werden. Die Schaltstellung für die Vorwärtsgänge 2, 4, 5, 6, 7, 8, 9, 10 (mit Ausnahme des ersten und dritten Vorwärtsganges bzw. des Rückwärtsganges) entsprechen denen des Doppelkupplungsgetriebes 3 (vgl. Fig. 6). Auf die Beschreibung der Fig. 5 und Fig. 6 darf diesbezüglich verwiesen werden.

Wenn der Rückwärtsgang eingelegt ist, wird das Antriebsmoment entweder wie bei dem Doppelkupplungsgetriebe 3 (vgl. Fig. 5 und Fig. 6) oder wie folgt realisiert. Im vorliegenden Fall wird das Antriebsmoment über die äußere Getriebeeingangswelle 6 übertragen. Die Kopplungsvorrichtungen S2 und S3 befinden sich in der rechten Schaltstellung. Die restlichen Kopplungsvorrichtungen befinden sich in der Neutralstellung. Hierdurch wird der Leistungsfluss von der Getriebeeingangswelle 6 über die Kopplungsvorrichtung S3, auf das Zahnrad 16, das Zahnrad 24, das Zahnrad 20 und über die Kopplungsvorrichtung S2 auf die Triebwelle 9 übertragen. Der Rückwärtsgang ist hier nicht als Windungsgang ausgebildet.

Die im Zusammenhang mit dem Doppelkupplungsgetriebe 4 beschriebene Rückwärtsgangvariante ist auch bei dem Doppelkupplungsgetriebe 3 realisierbar.

Wenn der erste Vorwärtsgang eingelegt ist, wird das Antriebsmoment beziehungsweise der Leistungsfluss über die äußere Getriebeeingangswelle 6 übertragen. Die Kopplungsvorrichtung S1 befindet sich in der linken Schaltstellung. Die Kopplungsvorrichtungen S3 und S5 befinden sich in der rechten Schaltstellung. Die restlichen Kopplungsvorrichtungen S2, S4, S6 befinden sich in der Neutralstellung. Hierdurch wird der Leistungsfluss ausgehend von der Getriebeeingangswelle 6 über die Kopplungsvorrichtung S3 auf die beiden Zahnräder 16, 24, die Hohlwelle 28, die Kopplungsvorrichtung S5, die beiden Zahnräder 22 und 13 sowie damit das Zahnrad 12 und das Zahnrad 17, die Kopplungsvorrichtung S1 und damit in die Triebwelle 9 übertragen. Der Leistungsfluss windet sich über die Zahnradstufen des dritten, vierten und zweiten Vorwärtsganges.

Wenn nun der dritte Vorwärtsgang eingelegt ist, wird der Leistungsfluss über die äußere Getriebeeingangswelle 6 übertragen. Die beiden Kopplungsvorrichtungen S3 und S4 sind in der rechten Schaltstellung angeordnet und die übrigen Kopplungsvorrichtungen sind in ihrer Neutralstellung. Hierdurch wird der Leistungsfluss von der äußeren Getriebeeingangswelle 6 auf das Zahnrad 16, das Zahnrad 24, auf die Hohlwelle 28 und auf die Kopplungsvorrichtung S4 und von da aus an die Triebwelle 10 übertragen.

Mindestens eine der Kopplungsvorrichtungen kann als eine Synchronisiervorrichtung realisiert werden.

### Bezugszeichenliste

- 1: Doppelkupplungsgetriebe
- 2: Doppelkupplungsgetriebe
- 3: Doppelkupplungsgetriebe
- 4: Doppelkupplungsgetriebe
- 5: innere, erste Getriebeeingangswelle
- 6: äußere, zweite Getriebeeingangswelle
- 7: Lager
- 8: Lager
- 9: erste Triebwelle
- 10: zweite Triebwelle
- 11: Zahnrad (Festrad, erste Getriebeeingangswelle)
- 12: Zahnrad (Festrad, erste Getriebeeingangswelle)
- 13: Zahnrad (Festrad, erste Getriebeeingangswelle)
- 14: Zahnrad (zweite Getriebeeingangswelle)
- 14a: Losrad
- 14b: Festrad
- 15: Zahnrad (Losrad, zweite Getriebeeingangswelle)
- 16: Zahnrad (Festrad, zweite Getriebeeingangswelle)
- 17: Zahnrad (erste Triebwelle)
- 18: Zahnrad (erste Triebwelle)
- 19: Zahnrad (erste Triebwelle)
- 20: Zahnrad (erste Triebwelle)
- 21: Zahnrad (zweite Triebwelle)
- 22: Zahnrad (zweite Triebwelle)
- 23: Zahnrad (zweite Triebwelle)
- 24: Zahnrad (zweite Triebwelle)
- 25: Hohlwellenabschnitt
- 26: Kupplungskörper
- 28: Hohlwelle
- 29: Lager
- 30: Lager
- 31: Doppelradebene
- 32: Doppelradebene
- 33: Zwischenrad

- a: Abtriebsritzel
- b: Abtriebsritzel

- S1: Kopplungsvorrichtung
- S2: Kopplungsvorrichtung
- S3: Kopplungsvorrichtung
- S4: Kopplungsvorrichtung
- S5: Kopplungsvorrichtung
- S6: Kopplungsvorrichtung

## Patentansprüche

1. Doppelkupplungsgetriebe (1, 2, 3, 4) für ein Kraftfahrzeug mit einer ersten Getriebeeingangswelle (5), mit einer zweiten Getriebeeingangswelle (6), mit einer ersten Triebwelle (9) und einer zweiten Triebwelle (10), mit mehreren Zahnrädern (11 bis 24), mit mehreren Kopplungsvorrichtungen (S1, S2, S3, S4, S5, S6), wobei die erste Getriebeeingangswelle (5) über eine erste Reibkupplung und die zweite Getriebeeingangswelle (6) über eine zweite Reibkupplung mit einem Antriebsmotor verbindbar oder verbunden ist, wobei die Zahnräder (11 bis 24) derart kämmend angeordnet sind, dass mehrere Vorwärtsgänge mittels der Kopplungsvorrichtungen (S1 bis S6) schaltbar sind, wobei mindestens ein Vorwärtsgang als Windungsgang ausgebildet ist, wobei sich ein Leistungsfluss des Windungsganges über mehrere Zahnradstufen windet, und wobei bestimmte Zahnräder zwei Doppelradebenen (31, 32) bilden, wobei mindestens eine der Doppelradebenen (31, 32) drei einzelne Losräder (14, 18, 23; 15, 19, 24; 15, 19, 23) aufweist, wobei eines dieser Losräder (14; 15) einer der Getriebeeingangswellen (5 bzw. 6) zugeordnet ist und die beiden anderen Losräder (18, 23; 19, 24; 19, 23) jeweils einer der beiden Triebwellen (9, 10) zugeordnet sind **dadurch gekennzeichnet, dass** auf der zweiten Triebwelle (10) eine Hohlwelle (28) drehbar angeordnet ist, wobei die Hohlwelle (28) über eine der Kopplungsvorrichtungen (S4) mit der Triebwelle (10) drehfest verbindbar ist, wobei auf der Hohlwelle (28) mindestens ein Losrad (21, 22, 23) und mindestens eine weitere Kopplungsvorrichtung, insbesondere zwei weitere Kopplungsvorrichtungen (S5, S6) angeordnet sind, wobei das mindestens eine Losrad (21, 22, 23) mittels der mindestens einer weiteren Kopplungsvorrichtung (S5 bzw. S6) drehfest mit der Hohlwelle (28) verbindbar sind.

2. Doppelkupplungsgetriebe nach Anspruch 1, **dadurch gekennzeichnet, dass** sechs Radebenen mit genau zwei Doppelradebenen (31, 32) vorgesehen sind.

3. Doppelkupplungsgetriebe nach Anspruch 1 oder 2, **dadurch gekennzeichnet, dass** eine der Doppelradebenen (31, 32) ein Zwischenrad (33) zur Realisierung eines Rückwärtsganges aufweist.

4. Doppelkupplungsgetriebe nach einem der vorstehenden Ansprüche, **dadurch gekennzeichnet, dass** der äußeren Getriebeeingangswelle (6) drei Zahnräder (14, 15, 16) zugeordnet sind, wobei mindestens eines der Zahnräder (14, 16) als Festrad und mindestens eines der Zahnräder (15) als Losrad ausgebildet ist, und wobei zwei dieser drei Zahnräder (14, 15, 16) Teil der beiden Doppelradebenen (31, 32) sind.

5. Doppelkupplungsgetriebe nach einem der vorstehenden Ansprüche, **dadurch gekennzeichnet, dass** auf der ersten Triebwelle (9) vier Zahnräder (17, 18, 19, 20) in Form von Losrädern angeordnet sind, wobei auf der ersten Triebwelle (9) ferner zwei doppelt wirkende Kopplungsvorrichtungen (S1, S2) angeordnet sind.

6. Doppelkupplungsgetriebe nach einem der Ansprüche 1 bis 4, **dadurch gekennzeichnet, dass** auf der ersten Triebwelle (9) vier Zahnräder (17, 18, 19, 20) in Form von Losrädern angeordnet sind, wobei auf der ersten Triebwelle (9) eine doppelt wirkende Kopplungsvorrichtung (S1) und auf einem der Losräder (17, 18, 19, 20) eine weitere doppelt wirkende Kopplungsvorrichtung (S2) angeordnet ist, wobei mittels dieser weiteren Kopplungsvorrichtung (S2) dieses Losrad (20) mit einem weiteren Losrad (19) und mit der ersten Triebwelle (9) drehfest verbindbar ist.

7. Doppelkupplungsgetriebe nach einem der vorstehenden Ansprüche, **dadurch gekennzeichnet, dass** zehn Vorwärtsgänge vorgesehen sind.

8. Doppelkupplungsgetriebe nach einem der vorstehenden Ansprüche, **dadurch gekennzeichnet, dass** jeder der beiden Triebwellen (9, 10) ein Abtriebsritzel (a, b) zugeordnet ist, wobei die beiden Abtriebsritzel (a, b) unterschiedliche Größen aufweisen, wobei vorzugsweise der Leistungsfluss des ersten, zweiten, siebten, achten, neunten und zehnten Vorwärtsgangs über die Triebwelle (9) mit dem größeren Abtriebsritzel (a) erfolgt und der Leistungsfluss des dritten, vierten, fünften, sechsten Vorwärtsgangs über die andere Triebwelle (10) mit dem kleineren Abtriebsritzel (b) erfolgt.

9. Doppelkupplungsgetriebe nach einem der vorstehenden Ansprüche, **dadurch gekennzeichnet, dass** die eine Doppelradebene (32) die Zahnradstufen eines dritten Vorwärtsganges und eines Rückwärtsganges aufweist und die andere Doppelradebene (31) die Zahnradstufen eines fünften und siebten Vorwärtsganges aufweist.

10. Doppelkupplungsgetriebe nach einem der vorstehenden Ansprüche, **dadurch gekennzeichnet, dass** der erste, achte und zehnte Vorwärtsgang als Windungsgang ausgebildet sind.

11. Doppelkupplungsgetriebe nach einem der vorstehenden Ansprüche, **dadurch gekennzeichnet, dass** der Leistungsfluss des ersten Vorwärtsganges sich über die Zahnradstufen des dritten Vorwärtsganges, des vierten Vorwärtsganges und des zweiten Vorwärtsganges windet.

12. Doppelkupplungsgetriebe nach einem der vorstehenden Ansprüche, **dadurch gekennzeichnet, dass** der Leistungsfluss des achten Vorwärtsganges sich über die Zahnradstufen des sechsten, fünften und siebten Vorwärtsganges windet.

13. Doppelkupplungsgetriebe nach einem der vorstehenden Ansprüche, **dadurch gekennzeichnet, dass** der Leistungsfluss des zehnten Vorwärtsganges sich über die Zahnradstufen des sechsten, fünften und neunten Vorwärtsganges windet.

## Claims

1. A dual-clutch transmission (1, 2, 3, 4) for a motor vehicle with a first transmission input shaft (5), with a second transmission input shaft (6), with a first drive shaft (9) and a second drive shaft (10), with several gearwheels (11 to 24), with several coupling apparatuses (S1, S2, S3, S4, S5, S6), wherein the first transmission input shaft (5) can be connected or is connected via a first friction clutch and the second transmission input shaft (6) via a second friction clutch with a drive motor, wherein the gearwheels (11 to 24) are arranged meshing in such a way that several forward gears can be changed by means of the coupling apparatuses (S1 to S6), wherein at least one forward gear is formed as winding gear, wherein a power flow of the winding gear winds over several gearwheel levels, and wherein certain gearwheels form two double wheel levels (31, 32), wherein at least one of the double wheel levels (31, 32) has three individual idling gears (14, 18, 23; 15, 19, 24; 15, 19, 23), wherein one of these idling gears (14; 15) is assigned to one of the transmission input shafts (5 or 6) and the other two idling gears (18, 23; 19, 24; 19, 23) are assigned, respectively, to one of the two drive shafts (9, 10), **characterised in that** a hollow shaft (28) is rotatably arranged on the second drive shaft (10), wherein the hollow shaft (28) can be connected in a rotationally fixed manner via one of the coupling apparatuses (S4) with the drive shaft (10), wherein at least one idling gear (21, 22, 23) and at least one further coupling apparatus, particularly two further coupling apparatuses (S5, S6), are arranged on the hollow shaft (28), wherein the at least one idling gear (21, 22, 23) can be connected in a rotationally fixed manner by means of the at least one further coupling apparatus (S5 or S6) with the hollow shaft (28) .

2. The dual-clutch transmission according to claim 1, **characterised in that** six wheel levels with exactly two double wheel levels (31, 32) are provided.

3. The dual-clutch transmission according to claim 1 or 2, **characterised in that** one of the double wheel levels (31, 32) has an intermediate wheel (33) for realising a reverse gear.

4. The dual-clutch transmission according to one of the preceding claims, **characterised in that** assigned to the outer transmission input shaft (6) are three gearwheels (14, 15, 16), wherein at least one of the gearwheels (14, 16) is formed as fixed wheel and at least one of the gearwheels (15) as idling gear, and wherein two of these three gearwheels (14, 15, 16) are part of the two double wheel levels (31, 32).

5. The dual-clutch transmission according to one of the preceding claims, **characterised in that** four gearwheels (17, 18, 19, 20) in the form of idling gears are arranged on the first drive shaft (9), wherein further two double-acting coupling apparatuses (S1, S2) are arranged on the first drive shaft (9).

6. The dual-clutch transmission according to one of the claims 1 to 4, **characterised in that** four gearwheels (17, 18, 19, 20) in form of idling gears are arranged on the first drive shaft (9), wherein a double-acting coupling apparatus (S1) is arranged on the first drive shaft (9) and on one of the idling gears (17, 18, 19, 20) a further double-acting coupling apparatus (S2), wherein said idling gear (20) can be connected in a rotationally fixed manner with a further idling gear (19) and the first drive shaft (9) by means of said further coupling apparatus (S2).

7. The dual-clutch transmission according to one of the preceding claims, **characterised in that** ten forward gears are provided.

8. The dual-clutch transmission according to one of the preceding claims, **characterised in that** an output pinion (a, b) is assigned to each of the two drive shafts (9, 10), wherein the two output pinions (a, b) have different variables, wherein preferably the power flow of the first, second, sevenths, eighth, ninth and tenth forward gear takes place via the drive shaft (9) with the largest output pinion (a), and the power flow of the third, fourth, fifth, sixth forward gear via the other drive shaft (10) with the smaller output pinion (b).

9. The dual-clutch transmission according to one of the preceding claims, **characterised in that** the one double wheel level (32) has the gearwheel levels of a third forward gear and of a reverse gear, and the other double wheel level (31) has the gearwheel levels of a fifth and seventh forward gear.

10. The dual-clutch transmission according to one of the preceding claims, **characterised in that** the first, eighth and tenth forward gear is formed as winding gear.

11. The dual-clutch transmission according to one of the preceding claims, **characterised in that** the power flow of the first forward gear winds over the gearwheel levels of the third forward gear, the fourth forward gear and the second forward gear.

12. The dual-clutch transmission according to one of the preceding claims, **characterised in that** the power flow of the eighth forward gear winds over the gearwheel levels of the sixth, fifth and seventh forward gear.

13. The dual-clutch transmission according to one of the preceding claims, **characterised in that** the power flow of the tenth forward gear winds over the gearwheel levels of the sixth, fifth and ninth forward gear.

## Revendications

1. Transmission à double embrayage (1, 2, 3, 4) pour un véhicule automobile avec un premier arbre d'entrée de transmission (5), avec un deuxième arbre d'entrée de transmission (6), avec un premier arbre de commande (9) et un deuxième arbre de commande (10), avec plusieurs roues dentées (11 à 24), avec plusieurs dispositifs de couplage (S1, S2, S3, S4, S5, S6), le premier arbre d'entrée de transmission (5) pouvant être connecté ou est connecté à un moteur d'entraînement via un premier embrayage à friction et le deuxième arbre d'entrée de transmission (6) via un deuxième embrayage à friction, dans lequel les roues dentées (11 à 24) sont agencés de manière à engrener de telle sorte que plusieurs marches avant peuvent être commutées au moyen des dispositifs de couplage (S1 à S6), au moins une marche avant étant conçue comme une marche d'enroulement, dans laquelle un flux de puissance de la marche d'enroulement s'enroule sur plusieurs étages de roue dentée, et certains roues dentées forment deux plans de roue doubles (31, 32), au moins un des plans de roue doubles (31, 32) ayant trois roues folles individuelles (14, 18, 23; 15, 19, 24; 15, 19, 23), une de ces roues folles (14; 15) étant associée à l'un des arbres d'entrée de transmission (5 ou 6) et les deux autres roues folles (18, 23; 19, 24; 19, 23) sont chacune associée à l'un des deux arbres de commande (9, 10), **caractérisé en ce que** sur le deuxième arbre de commande (10) est agencé en rotation un arbre creux (28), l'arbre creux (28) pouvant être relié solidairement en rotation à l'arbre de commande (10) via l'un des dispositifs de couplage (S4), au moins une roue folle (21, 22 , 23) et au moins un autre dispositif de couplage, en particulier deux autres dispositifs de couplage (S5, S6) sont agencés sur l'arbre creux (28), la au moins une roue folle (21, 22, 23) pouvant être reliée solidairement en rotation à l'arbre creux (28) au moyen de l'au moins un autre dispositif de couplage (S5 ou S6) .

2. Transmission à double embrayage selon la revendication 1, **caractérisée en ce que** sont prévus six plans de roue avec exactement deux plans de roue doubles (31, 32).

3. Transmission à double embrayage selon la revendication 1 ou 2, **caractérisée en ce que** l'un des plans de roue doubles (31, 32) comporte une roue intermédiaire (33) pour réaliser une marche arrière.

4. Transmission à double embrayage selon l'une des revendications précédentes, **caractérisée en ce que** à l'arbre d'entrée de transmission externe (6) sont associées trois roues dentées (14, 15, 16), au moins une des roues dentées (14, 16) étant conçue comme une roue fixe et au moins une des roues dentées (15) comme une roue folle, et deux de ces trois roues dentées (14, 15, 16) faisant partie des deux plans de roue doubles (31, 32).

5. Transmission à double embrayage selon l'une des revendications précédentes, **caractérisée en ce que** quatre roues dentées (17, 18, 19, 20) en forme de roues folles sont agencées sur le premier arbre de commande (9), deux autres dispositifs de couplage à double effet (S1, S2) étant agencés de plus sur le premier arbre de commande (9).

6. Transmission à double embrayage selon l'une des revendications 1 à 4, **caractérisée en ce que** quatre roues dentées (17, 18, 19, 20) en forme de roues folles sont agencées sur le premier arbre de commande (9), un dispositif de couplage à double effet (S1) étant agencé sur le premier arbre de commande (9) et sur l'une des roues folles (17, 18, 19, 20) étant agencé un autre dispositif de couplage à double effet (S2), au moyen de cet autre dispositif de couplage (S2), cette roue folle (20) pouvant être connectée solidairement en rotation avec une autre roue folle (19) et un premier arbre de commande (9).

7. Transmission à double embrayage selon l'une des revendications précédentes, **caractérisé en ce que** sont prévues dix marches avant.

8. Transmission à double embrayage selon l'une des revendications précédentes, **caractérisée en ce que** à chacun des deux arbres d'entraînement (9, 10) est associé un pignon de sortie (a, b), les deux pignons de sortie (a, b) ayant des tailles différentes, de préférence le flux de puissance de la première, deuxième, septième, huitième, neuvième et dixième marche avant ayant lieu via l'arbre de commande (9) avec le pignon de sortie (a) le plus grand et le flux de puissance de la troisième, quatrième, cinquième, sixième marche avant via l'autre arbre de commande (10) avec le pignon de sortie (b) le plus petit.

9. Transmission à double embrayage selon l'une des revendications précédentes, **caractérisée en ce que** le premier plan de roue double (32) comporte les étages d'une roue dentée d'une troisième marche avant et une marche arrière et l'autre plan de roue double (31) comporte les étages de roue dentée d'une cinquième et septième marche avant.

10. Transmission à double embrayage selon l'une des revendications précédentes, **caractérisée en ce que** la première, huitième et dixième marche avant sont conçues comme une marche d'enroulement.

11. Transmission à double embrayage selon l'une des revendications précédentes, **caractérisée en ce que** le flux de puissance de la première marche avant s'enroule sur les étages de la roue dentée de la troisième marche avant, de la quatrième marche avant et de la deuxième marche avant.

12. Transmission à double embrayage selon l'une des revendications précédentes, **caractérisée en ce que** le flux de puissance de la huitième marche avant s'enroule sur les étages de la roue dentée de la sixième, cinquième et septième marche avant.

13. Transmission à double embrayage selon l'une des revendications précédentes, **caractérisée en ce que** le flux de puissance de la dixième marche avant s'enroule sur les étages de la roue dentée de la sixième, cinquième et neuvième marche avant.
